# EUROPÄISCHE PATENTSCHRIFT

(11) **EP 2 449 438 B1**
(45) Veröffentlichungstag und Bekanntmachung des Hinweises auf die Patenterteilung: **13.02.2013**
(21) Anmeldenummer: 10720938.9
(22) Anmeldetag: 01.06.2010
(51) Int. Cl.: G05B 19/042

(54) **VERFAHREN UND SYSTEM ZUR ANSTEUERUNG VON MINDESTENS EINEM AKTUATOR**
METHOD AND SYSTEM FOR DRIVING AT LEAST ONE ACTUATOR
PROCÉDÉ ET SYSTÈME POUR COMMANDER AU MOINS UN ACTIONNEUR

(30) Priorität: 01.07.2009 DE 102009027369
(43) Veröffentlichungstag der Anmeldung: 09.05.2012
(73) Patentinhaber: Robert Bosch GmbH, 70442 Stuttgart (DE)
(72) Erfinder: FEUCHTER, Wilfried, 74635 Kupferzell (DE); HEYL, Andreas, 71640 Ludwigsburg (DE)
(86) Internationale Anmeldenummer: PCT/EP2010/057649
(87) Internationale Veröffentlichungsnummer: WO 2011/000651

(56) Entgegenhaltungen:
- DE-A1-102006 047 026
- US-B1- 6 845 467

## Beschreibung

### Stand der Technik

Die Erfindung betrifft eine Verfahren sowie ein System zur Ansteuerung von mindestens einem Aktuator nach den Oberbegriffen der Ansprüche 1 und 8.

Es sind sogenannte 1002-Systeme (1002 = 1 out of 2) bekannt, bei denen eine Auswahllogik entscheidet, welches von zwei Steuergeräten aktiviert werden soll. Die Entscheidung wird dabei in Abhängigkeit von Aktivierungssignalen getroffen, die der Auswahllogik zugeführt sind. Die Aktivierungssignale werden von übergeordneten Diagnose- und Überwachungseinrichtungen erzeugt, die die beiden Steuergeräte fortlaufend im Hinblick auf ihre Funktionsfähigkeit überprüfen. Insbesondere die Ausgestaltung dieser Diagnose- und Überwachungseinrichtungen ist mit einem hohen Hardware- und Software-Aufwand verbunden.

Aus der US 6,845,467 B1 sind ein System und ein Verfahren bekannt, eine Steuerung zwischen redundanten Steuergeräten umzuschalten. Der Status der redundanten Steuergeräte wird dabei überwacht, um festzustellen, ob ein Umschalten der Steuerung zwischen den Steuergeräten notwendig ist. Die Überwachung und das Umschaltesystem sind Hardware-basiert und die Steuerung ist über eine Zustandsmaschine implementiert. Dabei werden Statussignale erzeugt, welche dem Status der Steuergeräte entsprechen, denen sie zugeordnet sind.

### Offenbarung der Erfindung

Der Erfindung liegt die Aufgabe zugrunde, ein System der eingangs genannten Art zu schaffen, das hinsichtlich der laufenden Überwachung einen geringeren Aufwand erfordert. Die Erfindung löst diese Aufgabe durch ein Verfahren nach dem Anspruch 1 sowie ein System nach dem Anspruch 7. Bei der Erfindung wird von jedem der Steuergeräte eine Eigen-Diagnose durchgeführt. Danach werden von jedem der Steuergeräte in Abhängigkeit von der Eigen-Diagnose Aktivierungssignale erzeugt, die angeben, welches der Steuergeräte aktiviert werden soll. Von der Auswahllogik wird dann in Abhängigkeit von den Aktivierungssignalen eines der beiden Steuergeräte zur Beeinflussung des Aktuators aktiviert. Erfindungsgemäß führen die beiden Steuergeräte eine Eigen-Diagnose durch. Der zusätzliche Hardware-Aufwand für eine übergeordnete Diagnose- und Überwachungseinrichtung ist somit nicht erforderlich. Statt dessen kann die Eigen-Diagnose im wesentlichen nur durch zusätzliche Software in den jeweiligen Steuergeräten realisiert werden. Dies stellt eine wesentliche Vereinfachung und Kostenreduktion bei dem erfindungsgemäßen System dar. Bei einer vorteilhaften Weiterbildung der Erfindung weist mindestens eines der beiden Steuergeräte einen Prozessor und einen Watchdog auf, wobei der Prozessor von dem Watchdog fortlaufend auf mögliche Fehler überprüft wird, und wobei von dem Watchdog im Fehlerfall ein Fehlersignal erzeugt wird, in dessen Abhängigkeit das/die Aktivierungssignal/e des zugehörigen Steuergeräts erzeugt werden. Bei dem sogenannten Watchdog handelt es sich um eine Einrichtung, die ohne größeren Aufwand realisiert werden kann.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung-dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

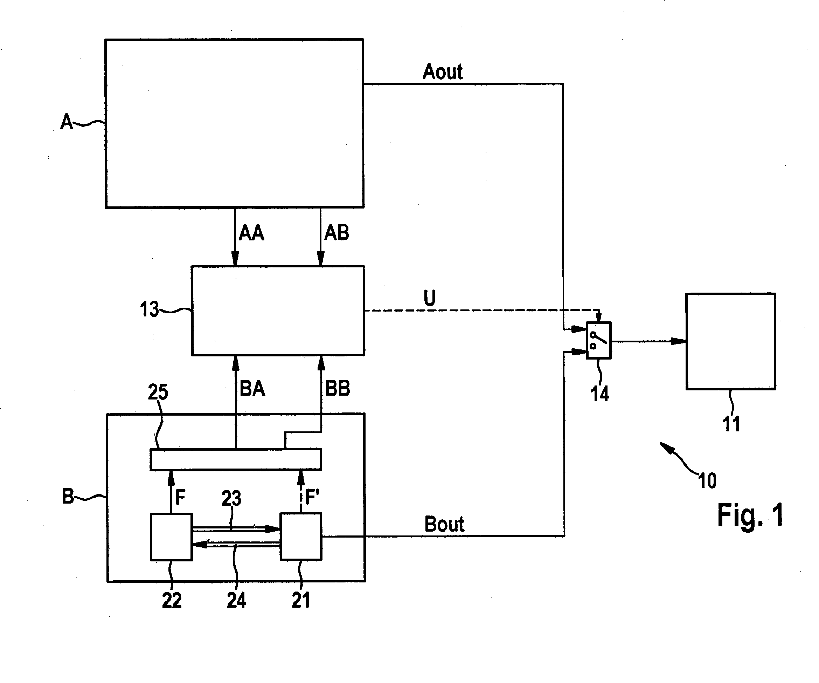

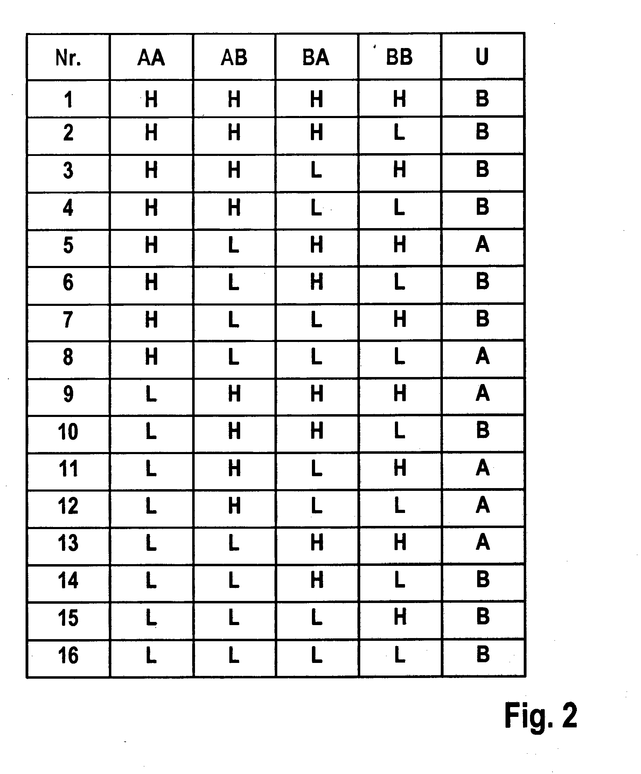

Figur 1 zeigt ein schematisches Blockschaltbild eines Ausführungsbeispiels eines erfindungsgemäßen Systems zur Ansteuerung von mindestens einem Aktuator und Figur 2 zeigt eine Tabelle zur Anwendung in dem System der Figur 1. In der Figur 1 ist ein System 10 dargestellt, das zur Ansteuerung von mindestens einem Aktuator 11 vorgesehen ist. Das System 10 weist zwei Steuergeräte A, B sowie eine Auswahllogik 13 auf. Das Steuergerät A erzeugt zwei Aktivierungssignale AA, AB, die der Auswahllogik 13 zugeführt sind, und das Steuergerät B erzeugt zwei Aktivierungssignale BA, BB, die ebenfalls der Auswahllogik 13 zugeführt sind. Weiterhin erzeugt jedes der Steuergeräte A, B ein Ansteuersignal Aout, Bout, das zur Ansteuerung des Aktuators 11 vorgesehen ist. Die Ansteuersignale Aout, Bout sind den beiden Eingängen eines Umschalters 14 zugeführt, dessen Ausgang mit dem Aktuator 11 verbunden ist. Die Schaltstellung des Umschalters 14 wird über ein Umschaltsignal U von der Auswahllogik 13 vorgegeben.

In nicht-dargestellter Weise sind die beiden Steuergeräte A, B von einem oder mehreren Eingangssignalen beaufschlagt. Vorzugsweise sind beide Steuergeräte A, B dabei von denselben Eingangssignalen beaufschlagt. Bei diesen Eingangssignalen, wie auch bei den beiden Ansteuersignalen Aout, Bout kann es sich um digitale oder analoge Signale handeln.

Jedes der beiden Steuergeräte A, B ist dazu ausgebildet, den Aktuator 11 in Abhängigkeit von den Eingangssignalen zu beeinflussen. Jedes der beiden Steuergerät A, B ist dabei in der Lage, den Aktuator 11 völlig unabhängig von dem jeweils anderen Steuergerät B, A in der gewünschten Weise anzusteuern.

Weiterhin ist jedes der beiden Steuergeräte A, B dazu ausgebildet, sich selbst zu überprüfen. Jedes der beiden Steuergeräte A, B kann also eine Eigen-Diagnose durchführen. Diese Eigen-Diagnose eines der beiden Steuergeräte A, B ist dabei unabhängig von dem jeweils anderen Steuergerät B, A.

In Abhängigkeit von seiner Eigen-Diagnose erzeugt jedes der beiden Steuergeräte A, B seine Aktivierungssignale AA, AB, BA, BB. Alle vier Aktivierungssignale AA, AB, BA, BB werden von der Auswahllogik 13 empfangen. Mit Hilfe der Tabelle der Figur 2 erzeugt die Auswahllogik 13 das Umschaltsignal U und steuert damit den Umschalter 14 an. Dies hat zur Folge, dass der Umschalter 14 in eine bestimmte Schaltstellung geschaltet wird, die einem der beiden Steuergeräte A, B zugeordnet ist. Es wird also von dem Umschalter 14 nur das Ansteuersignal Aout, Bout desjenigen Steuergeräts A, B an den Aktuator 11 weitergegeben, das mittels des Umschaltsignals U ausgewählt ist.

Die vier Aktivierungssignale AA, AB, BA, BB können jeweils einen logischen Wert "L" oder "H" aufweisen, wobei im vorliegenden Ausführungsbeispiel von einer Logik ausgegangen wird, bei dem der Wert "L" einen erwünschten Zustand kennzeichnet.

Weist das Aktivierungssignal AA beispielsweise den Wert "H" und das Aktivierungssignal AB den Wert "L" auf, so bedeutet dies, dass das Steuergerät A als Wunschzustand das Steuergerät B aktiviert haben möchte. Dieser Wunschzustand des Steuergeräts A kann sich beispielsweise dann ergeben, wenn das Steuergerät A bei einer Eigen-Diagnose feststellt, dass es selbst nicht völlig fehlerfrei arbeitet. In diesem Fall will das Steuergerät A selbst nicht aktiv sein und erzeugt deshalb das Aktivierungssignal AA mit dem Wert "H". Statt dessen will das Steuergerät A, dass das Steuergerät B aktiv wird und erzeugt deshalb das Aktivierungssignal AB mit dem Wert "L".

In der Tabelle der Figur 2 sind alle möglichen Kombinationen der vier Aktivierungssignale AA, AB, BA, BB eingetragen und mit Nummern von 1 bis 16 versehen. Zu jeder Kombination ist weiterhin angegeben, welches der beiden Steuergeräte A, B jeweils mit Hilfe des Umschaltsignals U bzw. der Schaltstellung des Umschalters 14 aktiviert wird.

Der vorstehend erläuterte Fall, dass das Steuergerät A die Aktivierungssignale AA=H und AB=L erzeugt, sind in der Tabelle der Figur 2 beispielsweise bei der Kombination 6 vorhanden. Dort erzeugt das Steuergerät B die Aktivierungssignale BA=H und BB=L. Dies bedeutet, dass beide Steuergeräte A, B übereinstimmend wünschen, dass das Steuergerät A nicht aktiv ist, sondern dass das Steuergerät B aktiv ist. Dies stellt somit einen Normalzustand für die Aktivierung des Steuergeräts B dar.

Bei der Kombination 5 wünscht das Steuergerät A die Aktivierung des Steuergeräts B. Das Steuergerät B erzeugt jedoch die Aktivierungssignale BA=BB=H. Die Tatsache, dass das Steuergerät B sich selbst und auch das Steuergerät A deaktivieren will, ist nicht plausibel und deutet darauf hin, dass das Steuergerät B nicht mehr funktionsfähig ist. Aus diesem Grund wird in diesem Fall auf das Steuergerät A umgeschaltet, obwohl das Steuergerät A selbst gar nicht aktiviert werden will.

Ähnlich verhält es sich bei der Kombination 8. Dort will das Steuergerät B aufgrund der Aktivierungssignale BA=BB=L sich selbst und gleichzeitig das Steuergerät A aktivieren. Das ist nicht plausibel und deutet darauf hin, dass das Steuergerät B nicht mehr funktionsfähig ist. Aus diesem Grund wird auch in diesem Fall auf das Steuergerät A umgeschaltet, obwohl das Steuergerät A selbst gar nicht aktiviert werden will.

Bei der Kombination 7 erzeugen die Steuergeräte A, B Aktivierungssignale, die einander entgegengesetzt sind. So will das Steuergerät A sich selbst deaktivieren und das Steuergerät B aktivieren, während das Steuergerät B gerade nicht aktiviert werden will, sondern das Steuergerät A aktivieren will. Gemäß der Tabelle der Figur 2 wird in diesem Fall per Definition das Steuergerät B aktiviert.

Bei der Kombination 11 wünschen beide Steuergeräte A, B, dass das Steuergerät A aktiviert wird. Die Kombination stellt somit den Normalzustand für die Aktivierung des Steuergeräts A dar.

Bei den Kombinationen 9 und 12 sind die Aktivierungssignale des Steuergeräts B nicht plausibel. Aus diesem Grund wird in diesen Fällen das Steuergerät A aktiviert, das auch selbst seine eigene Aktivierung wünscht. In ähnlicher Weise wird auch bei der Kombination 13 das Steuergerät A aktiviert.

Bei der Kombination 10 erzeugen die Steuergeräte A, B Aktivierungssignale, die einander entgegengesetzt sind. Gemäß der Tabelle der Figur 2 wird in diesem Fall per Definition das Steuergerät B aktiviert.

Bei den Kombinationen 2, 3 und 4 sind zumindest die Aktivierungssignale des Steuergeräts A jeweils nicht plausibel. Es wird in diesen Fällen deshalb immer auf das Steuergerät B umgeschaltet, selbst wenn das Steuergerät B selbst gar nicht aktiviert werden will. In ähnlicher Weise sind bei den Kombinationen 14 und 15 jeweils die Aktivierungssignale des Steuergeräts A nicht plausibel. Es wird deshalb auch in diesen Fällen das Steuergerät B aktiviert.

Bei der Kombination 1 und 16 sind alle vier Aktivierungssignale nicht plausibel. Dies führt dazu, dass in beiden Fällen per Definition das Steuergerät B aktiviert wird.

Es wird also bei allen möglichen Kombinationen der Aktivierungssignale AA, AB, BA, BB jeweils eines der beiden Steuergeräte A, B aktiviert. Dies wird mit Hilfe des Umschaltsignals U durch eine entsprechende Schaltstellung des Umschalters 14 erreicht. Der Aktuator 11 wird dann von dem Ansteuersignal Aout, Bout des ausgewählten Steuergeräts A, B beeinflusst.

Wie erläutert wurde, gibt es Kombinationen, bei denen eines der beiden Steuergeräte A, B aktiviert wird, obwohl es selbst gar nicht aktiviert werden will. Beispielsweise ist dies bei der Kombination 5 der Fall. Tritt eine derartige oder vergleichbare Kombination auf, so kann es zusätzlich möglich sein, diesen Zustand einer übergeordneten Steuerung oder dem Anwender mitzuteilen. Die übergeordnete Steuerung oder der Anwender kann dann korrigierend in das System 10 der Figur 1 eingreifen und kann - entgegen der Tabelle der Figur 2 - eines der beiden Steuergeräte A, B nach völlig anderen Kriterien auswählen und aktivieren.

Die Ausgestaltung der beiden Steuergeräte A, B ist in der Figur 1 beispielhaft bei dem Steuergerät B dargestellt und wird nachfolgend anhand des Steuergeräts B erläutert. Es versteht sich, dass das Steuergerät A entsprechend ausgebildet sein kann.

Das Steuergerät B weist einen Prozessor 21 und einen sogenannten Watchdog 22 auf. Der Prozessor 21 ist unter anderem für die Erzeugung des Ansteuersignals Bout zuständig. Der Watchdog 22 hat die Aufgabe, die Funktionsfähigkeit des Prozessors 21 fortlaufend zu überprüfen. Dies ist in der Figur 1 mit dem Pfeil 23 kenntlich gemacht. Umgekehrt überprüft der Prozessor 21 fortlaufend die Funktionsfähigkeit des Watchdogs 22. Dies ist in der Figur 1 mit dem Pfeil 24 kenntlich gemacht.

Stellt der Watchdog 22 eine Fehlfunktion des Prozessors 21 fest, so erzeugt der Watchdog 22 ein Fehlersignal F. Dieses Fehlersignal F kann dabei gegebenenfalls Informationen über die Art des Fehlers des Prozessors 21 enthalten.

Stellt der Prozessor 21 eine Fehlfunktion des Watchdogs 22 fest, so verändert der Prozessor 21 seine Funktionsweise derart, dass es für den Watchdog 22 den Anschein hat, als ob der Prozessor 21 fehlerhaft arbeiten würde. Aufgrund dieser vermeintlichen Fehlfunktion des Prozessors 21 erzeugt der Watchdog 22 dann das bereits erwähnte Fehlersignal F. Alternativ oder zusätzlich ist es möglich, dass der Prozessor 21 ein Fehlersignal F' erzeugt, das unabhängig von dem Watchdog 22 weitergeleitet wird.

Das Fehlersignal F und gegebenenfalls das Fehlersignal F' sind einer Schaltung 25 zugeführt, das in Abhängigkeit von dem Fehlersignal F, F' die beiden Aktivierungssignale BA, BB des Steuergeräts B erzeugt.

Die Werte "L", "H" für die Aktivierungssignale BA, BB können dabei von den Informationen über die Art des Fehlers abhängig sein, die in dem Fehlersignal F, F' gegebenenfalls enthalten sind. Stellt der Watchdog 22 beispielsweise einen Totalausfall des Prozessors 21 fest, so kann dies zu anderen Werten "L", "H" für die Aktivierungssignale BA, BB führen als im Falle einer vorüber gehenden Störung der Prüftätigkeit des Watchdogs 22.

Durch die erläuterte Ausgestaltung des Steuergeräts B wird erreicht, dass beispielsweise ein Totalausfall des Prozessors 21 von dem Watchdog 22 erkannt und über die Schaltung 25 an die Auswahllogik 13 weitergemeldet wird. Die Schaltung 25 kann dabei derart ausgebildet sein, dass selbst dann, wenn weder der Prozessor 21, noch der Watchdog 22 funktionsfähig ist, die Werte "L", "H" der Aktivierungssignale BA, BB derart erzeugt werden, dass das Steuergerät B deaktiviert wird.

## Patentansprüche

1. Verfahren zur Ansteuerung von mindestens einem Aktuator (11), wobei zwei Steuergeräte (A, B) und eine Auswahllogik (13) vorhanden sind, und wobei jedes der Steuergeräte (A, B) zur Beeinflussung des Aktuators (11) ausgebildet ist, wobei von jedem der Steuergeräte (A, B) eine Eigen-Diagnose durchgeführt wird, wobei von jedem der Steuergeräte (A, B) in Abhängigkeit von der Eigen-Diagnose mindestens ein Aktivierungssignal (AA, AB, BA, BB) erzeugt wird, wobei das Aktivierungssignal (AA, AB, BA, BB) angibt, welches der Steuergeräte (A, B) aktiviert werden soll, und wobei von der Auswahllogik (13) in Abhängigkeit von den Aktivierungssignalen (AA, AB, BA, BB) eines der beiden Steuergeräte (A, B) zur Beeinflussung des Aktuators (11) aktiviert wird, **dadurch gekennzeichnet, dass** von jedem der beiden Steuergeräte (A, B) jeweils zwei Aktivierungssignale (AA, AB, BA, BB) erzeugt werden, dass jedes der beiden Aktivierungssignale (AA, AB, BA, BB) einem der beiden Steuergeräte (A, B) zugeordnet ist, und dass die beiden Aktivierungssignale (AA, AB, BA, BB) angeben, ob das jeweils zugehörige Steuergerät (A, B) aktiviert werden soll oder nicht.

2. Verfahren Anspruch 1, wobei von der Auswahllogik (13) geprüft wird, ob die von den beiden Steuergeräten (A, B) empfangenen Aktivierungssignale plausibel sind, und wobei von der Auswahllogik (13) das eine Steuergerät aktiviert wird, wenn das/die Aktivierungssignal/e des anderen Steuergeräts nicht plausibel ist/sind.

3. Verfahren nach Anspruch 2, wobei das eine Steuergerät selbst dann aktiviert wird, wenn es selbst keine Aktivierung wünscht.

4. Verfahren nach einem der vorstehenden Ansprüche, wobei von der Auswahllogik (13) geprüft wird, ob die von den beiden Steuergeräten (A, B) empfangenen Aktivierungssignale plausibel sind, und wobei von der Auswahllogik (13) eines der beiden Steuergeräte aktiviert wird, wenn alle Aktivierungssignale nicht plausibel sind.

5. Verfahren nach einem der vorstehenden Ansprüche, wobei dasjenige Steuergerät aktiviert wird, das von beiden Steuergeräten (A, B) übereinstimmend als zu aktivierendes Steuergerät angegeben ist.

6. Verfahren nach einem der vorstehenden Ansprüche, wobei mindestens eines der beiden Steuergeräte (A, B) einen Prozessor (21) und einen Watchdog (22) aufweist, wobei der Prozessor (21) von dem Watchdog (22) fortlaufend auf mögliche Fehler überprüft wird, und wobei von dem Watchdog (22) im Fehlerfall ein Fehlersignal (F) erzeugt wird, in dessen Abhängigkeit das/die Aktivierungssignal/e des zugehörigen Steuergeräts erzeugt werden.

7. System (10) zur Ansteuerung von mindestens einem Aktuator (11), wobei zwei Steuergeräte (A, B) und eine Auswahllogik (13) vorhanden sind, wobei jedes der Steuergeräte (A, B) zur Beeinflussung des Aktuators (11) ausgebildet ist, wobei von jedem der Steuergeräte (A, B) eine Eigen-Diagnose durchführbar ist, wobei von jedem der Steuergeräte (A, B) in Abhängigkeit von der Eigen-Diagnose mindestens ein Aktivierungssignal (AA, AB, BA, BB) erzeugbar ist, wobei das Aktivierungssignal (AA, AB, BA, BB) angibt, welches der Steuergeräte (A, B) aktiviert werden soll, **dadurch gekennzeichnet, dass** von jedem der beiden Steuergeräte (A, B) jeweils zwei Aktivierungssignale (AA, AB, BA, BB) erzeugbar sind, wobei jedes der beiden Aktivierungssignale (AA, AB, BA, BB) einem der beiden Steuergeräte (A, B) zugeordnet ist, dass die beiden Aktivierungssignale (AA, AB, BA, BB) angeben, ob das jeweils zugehörige Steuergerät (A, B) aktiviert werden soll oder nicht, und dass von der Auswahllogik (13) in Abhängigkeit von den Aktivierungssignalen (AA, AB, BA, BB) eines der beiden Steuergeräte (A, B) zur Beeinflussung des Aktuators (11) aktivierbar ist.

8. System (10) nach Anspruch 7, wobei in der Auswahllogik (13) eine Tabelle umgesetzt ist, in der für jede Kombination der Aktivierungssignale (AA, AB, BA, BB) ein zu aktivierendes Steuergerät angegeben ist.

9. System (10) nach einem der Ansprüche 7 oder 9, wobei mindestens eines der beiden Steuergeräte (A, B) einen Prozessor (21) und einen Watchdog (22) aufweist, wobei der Prozessor (21) von dem Watchdog fortlaufend auf mögliche Fehler überprüfbar ist, und wobei von dem Watchdog (22) im Fehlerfall ein Fehlersignal (F) erzeugbar ist, in dessen Abhängigkeit das/die Aktivierungssignal/e des zugehörigen Steuergeräts erzeugt werden.

10. System (10) nach einem der Ansprüche 7 bis 9, wobei die Steuergeräte (A, B) zur Steuerung und/oder Regelung eines Aktuators insbesondere einer Brennkraftmaschine vorgesehen sind.

## Claims

1. Method for driving at least one actuator (11), wherein two control device (A, B) and a selection logic (13) are present, and wherein each of the control devices (A, B) is designed to influence the actuator (11), wherein self-diagnostics are carried out by each of the control devices (A, B), wherein each of the control devices (A, B) generates at least one activation signal (AA, AB, BA, BB) as a function of the self-diagnostics, wherein the activation signal (AA, AB, BA, BB) specifies which of the control devices (A, B) is to be activated, and wherein depending on the activation signals (AA, AB, BA, BB) the selection logic (13) activates one of the two control devices (A, B) in order to influence the actuator (11), **characterized in that** each of the two control devices (A, B) generates in each case two activation signals (AA, AB, BA, BB), **in that** each of the two activation signals (AA, AB, BA, BB) is assigned to one of the two control devices (A, B), and **in that** the two activation signals (AA, AB, BA, BB) specify whether the respectively associated control device (A, B) is to be activated or not.

2. Method according to Claim 1, wherein the selection logic (13) checks whether the activation signals which are received by the two control devices (A, B) are plausible, and wherein the selection logic (13) activates one control device if the activation signal/signals of the other control device is/are implausible.

3. Method according to Claim 2, wherein one control device is activated even if it does not desire activation itself.

4. Method according to one of the preceding claims, wherein the selection logic (13) checks whether the activation signals which are received by the two control devices (A, B) are plausible, and wherein the selection logic (13) activates one of the two control devices if all the activation signals are implausible.

5. Method according to one of the preceding claims, wherein that control device is activated which both control devices (A, B) specify in matching fashion as being the control device to be activated.

6. Method according to one of the preceding claims, wherein at least one of the two control devices (A, B) has a processor (21) and a watchdog (22), wherein the processor (21) is continuously checked by the watchdog (22) for possible faults, and wherein in the event of a fault the watchdog (22) generates a fault signal (F) as a function of which the activation signal/signals of the associated control device is/are generated.

7. System (10) for driving at least one actuator (11), wherein two control devices (A, B) and one selection logic (13) are provided, wherein each of the control devices (A, B) is designed to influence the actuator (11), and wherein each of the control devices (A, B) can carry out self-diagnostics, wherein each of the control devices (A, B) can generate at least one activation signal (AA, AB, BA, BB) as a function of the self-diagnostics, wherein the activation signal (AA, AB, BA, BB) specifies which of the control devices (A, B) is to be activated, **characterized in that** each of the two control devices (A, B) can generate two activation signals (AA, AB, BA, BB) in each case, wherein each of the two activation signals (AA, AB, BA, BB) is assigned to one of the two control devices (A, B), **in that** the two activation signals (AA, AB, BA, BB) specify whether the respectively associated control device (A, B) is to be activated or not, and **in that** depending on the activation signals (AA, AB, BA, BB) the selection logic (13) can activate one of the two control devices (A, B) in order to influence the actuator (11).

8. System (10) according to Claim 7, wherein a table in which a control device to be activated is specified for every combination of the activation signals (AA, AB, BA, BB) is implemented in the selection logic (13).

9. System (10) according to either of Claims 7 and 8, wherein at least one of the two control devices (A, B) has a processor (21) and a watchdog (22), wherein the processor (21) can be continuously checked by the watchdog for possible faults, and wherein in the event of a fault the watchdog (22) can generate a fault signal (F) as a function of which the activation signal/signals of the associated control device is/are generated.

10. System (10) according to one of Claims 7 to 9, wherein the control devices (A, B) are provided for performing open-loop and/or closed-loop control of an actuator, in particular of an internal combustion engine.

## Revendications

1. Procédé de commande d'au moins un actionneur (11), dans lequel
deux appareils de commande (A, B) et une logique de sélection (13) sont prévus, chacun des appareils de commande (A, B) étant configuré pour agir sur l'actionneur (11),
un auto-diagnostic est exécuté par chacun des appareils de commande (A, B),
au moins un signal d'activation (AA, AB, BA, BB) est formé par chacun des appareils de commande (A, B) en fonction de l'auto-diagnostic,
le signal d'activation (AA, AB, BA, BB) indique quel appareil de commande (A, B) doit être activé,
l'un des deux appareils de commande (A, B) est activé pour agir sur l'actionneur (11) par la logique de sélection (13) en fonction des signaux d'activation (AA, AB, BA, BB),
**caractérisé en ce que**
deux signaux d'activation (AA, AB, BA, BB) sont formés par chacun des deux appareils de commande (A, B),
**en ce que** chacun des deux signaux d'activation (AA, AB, BA, BB) est associé à l'un des deux appareils de commande (A, B) et
**en ce que** les deux signaux d'activation (AA, AB, BA, BB) indiquent si l'appareil de commande (A, B) associé doit être activé ou non.

2. Procédé selon la revendication 1, dans lequel la logique de sélection (13) vérifie si les signaux d'activation reçus des deux appareils de commande (A, B) sont plausibles et l'appareil de commande est activé par la logique de sélection (13) si le ou les signaux d'activation de l'autre appareil de commande ne sont pas plausibles.

3. Procédé selon la revendication 2, dans lequel un appareil de commande est activé même si lui-même ne souhaite pas d'activation.

4. Procédé selon l'une des revendications précédentes, dans lequel la logique de sélection (13) vérifie si les signaux d'activation reçus des deux appareils de commande (A, B) sont plausibles et dans lequel un des deux appareils de commande est activé par la logique de sélection (13) lorsque tous les signaux d'activation ne sont pas plausibles.

5. Procédé selon l'une des revendications précédentes, dans lequel l'appareil de commande activé est celui qui est indiqué comme appareil de commande à activer en accord avec les deux appareils de commande (A, B).

6. Procédé selon l'une des revendications précédentes, dans lequel au moins l'un des deux appareils de commande (A, B) présente un processeur (21) et un "chien de garde" (22), les éventuels défauts du processeur (21) étant surveillés en permanence par le chien de garde (22), et en cas de défaut, le chien de garde (22) forme un signal de défaut (F) en fonction duquel le ou les signaux d'activation de l'appareil de commande associé sont formés.

7. Système (10) de commande d'au moins un actionneur (11), dans lequel deux appareils de commande (A, B) et une logique de sélection (13) sont prévus, chacun des appareils de commande (A, B) étant configuré pour agir sur l'actionneur (11),
un auto-diagnostic pouvant être exécuté par chacun des appareils de commande (A, B),
au moins un signal d'activation (AA, AB, BA, BB) pouvant être formé par chacun des appareils de commande (A, B) en fonction de l'auto-diagnostic,
le signal d'activation (AA, AB, BA, BB) indiquant quel appareil de commande (A, B) doit être activé, **caractérisé en ce que**
deux signaux d'activation (AA, AB, BA, BB) sont formés par chacun des deux appareils de commande (A, B),
**en ce que** chacun des deux signaux d'activation (AA, AB, BA, BB) est associé à l'un des deux appareils de commande (A, B) et
**en ce que** les deux signaux d'activation (AA, AB, BA, BB) indiquent si l'appareil de commande (A, B) associé doit être activé ou non et
**en ce que** l'un des deux appareils de commande (A, B) peut être activé pour agir sur l'actionneur (11) par la logique de sélection (13) en fonction des signaux d'activation (AA, AB, BA, BB).

8. Système (10) selon la revendication 7, dans lequel un tableau qui indique quel appareil de commande doit être activé pour chaque combinaison des signaux d'activation (AA, AB, BA, BB) est converti dans la logique de sélection (13).

9. Système (10) selon l'une des revendications 7 ou 8, dans lequel au moins l'un des deux appareils de commande (A, B) présente un processeur (21) et un "chien de garde" (22), les éventuels défauts du processeur (21) étant surveillés en permanence par le chien de garde, et en cas de défaut, le chien de garde (22) forme un signal de défaut (F) en fonction duquel le ou les signaux d'activation de l'appareil de commande associé sont formés.

10. Système (10) selon l'une des revendications 7 à 9, dans lequel les appareils de commande (A, B) sont prévus pour commander et/ou réguler un actionneur, en particulier d'un moteur à combustion interne.
